Europäisches Patentamt

European Patent Office

Office européen des brevets

(19)

(11) Publication number: **0 071 407**
**B1**

(12) **EUROPEAN PATENT SPECIFICATION**

(45) Date of publication of patent specification: **06.11.85**

(51) Int. Cl.⁴: **F 16 B 19/10**

(21) Application number: **82303862.5**

(22) Date of filing: **22.07.82**

(54) Blind hole anchor nut fastener.

(30) Priority: **31.07.81 GB 8123554**

(43) Date of publication of application:
**09.02.83 Bulletin 83/06**

(45) Publication of the grant of the patent:
**06.11.85 Bulletin 85/45**

(84) Designated Contracting States:
**DE FR GB IT**

(56) References cited:
CH-A- 191 807
DE-A-1 901 533
DE-B-1 206 664
DE-B-1 450 903
DE-C- 688 031
DE-C- 844 848
DE-C-1 031 084
FR-A-1 373 649
FR-A-1 594 328
FR-A-2 016 187
GB-A-1 093 714
US-A-2 954 718

(73) Proprietor: **Ollis, Martin George
trading as Davmatic Precision Butler's Leap
Clifton Road Industrial Estate
Rugby Warwickshire (GB)**

(72) Inventor: **Ollis, Martin George
trading as Davmatic Precision Butler's Leap
Clifton Road Industrial Estate
Rugby Warwickshire (GB)**

(74) Representative: **Hands, Horace Geoffrey et al
GEORGE FUERY & CO Whitehall Chambers 23
Colmore Row
Birmingham B3 2BL (GB)**

Courier Press, Leamington Spa, England.

## Description

This invention relates to a nut fastener device for a blind hole anchor. British Patent GB—A—1093714 describes a blind hole anchor nut fastener which comprises a tubular sleeve and a screwthreaded nut disposed at the end of the sleeve, the arrangement being such that when a screwthreaded mandrel extending through the sleeve and engaged with the nut is displaced axially in the appropriate direction, the nut shears from the sleeve and is drawn into the sleeve in wedging engagement therewith.

Effectively, the sleeve is expanded by the nut, and to enable this expansion to take place the nut is generally frusto-conical, with its smallest end at the shear point and of a suitable diameter to enter the sleeve.

These anchor nuts are extremely difficult to manufacture satisfactorily. The tolerences are small, because if the nut is made too small relative to the sleeve it will not wedge satisfactorily, and if it is made too large the sleeve splits. If the shear point is too weak, nuts may shear as a result of handling in manufacture and transportation, and if the shear point is too strong, shearing will not take place but the sleeve will bell-out and be unsatisfactory for that reason.

Satisfactory manufacture is possible, indeed it is believed that nuts of said GB—A—1093714 have been extremely successful commercially but this has only been so because of great care in manufacturing within the prescribed tolerances, and with great difficulties in selecting material.

The object of the invention is to provide an improved nut of this kind which is capable of giving satisfactory results within wider tolerances of manufacture and/or material.

In accordance with the invention, a blind hole anchor comprises a tubular sleeve and a screwthreaded nut disposed at the end of the sleeve, the nut having frusto-conical surface portions with a maximum diameter at the end of the nut remote from the sleeve and a minimum diameter at the end nearest to the sleeve, the frusto cone being co-axial with the sleeve, and the arrangement being such that when the device is entered into a blind hole and a screwthreaded mandrel is passed through the sleeve and engaged with the nut and then displaced axially in the appropriate direction, the nut is drawn into the sleeve thereby expanding the sleeve and wedging the nut in the sleeve, characterised in that the nut has at least one back tapered face which is arcuate about an axis eccentric to that of said sleeve.

Preferably the face which is arcuate about the eccentric axis is concentric to that axis (but not necessarily so). According to a feature of the invention this further face (which may conveniently be called "the eccentric face"), is back tapered, that is to say it forms a portion of the surface of a frusto-cone having a maximum diameter adjacent the end of the sleeve.

Whilst the invention comprehends the possibility of a single concentric face a preferred number is three of each. Usually the nut and sleeve will be integral with a shear zone at the junction of the two, as in said GB—A—1093714, but it is within the bounds of possibility, and within the scope of the invention to make the two parts separate.

When such a fastener is installed, and the nut is drawn into the sleeve, the required expansion of the sleeve is considerably reduced. Further the sleeve is drawn to a complementary shape to the nut and hence becomes non-circular which provides an additional security against rotation.

One embodiment of the invention is now more particularly described with reference to the accompanying drawings, wherein:

Figure 1 is a plan view of the improved nut;

Figure 2 is an elevation of the same in the direction of the arrow A (Fig. 1); and

Figure 3 is an elevation of the same in the direction of the arrow B (Fig. 1);

Figure 4 is a perspective view illustrating the nut of Figures 1 to 3 installed on a piece of sheet material.

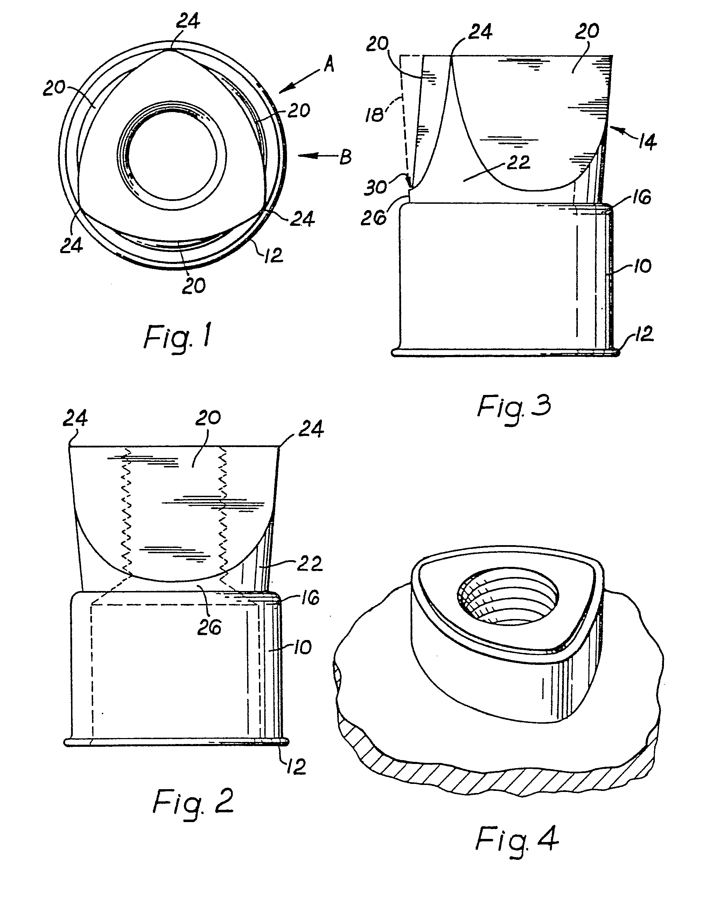

The anchor nut shown in Figures 1—4 of the drawings comprises a tubular sleeve 10 having a slight lip 12 at one end and provided with an integral nut 14 at the opposite end. The nut is connected to the sleeve via shear zone 16.

The nut is initially made as a frusto-cone — see the broken line Figure 3 indicated by the reference numeral 18 showing the original full diameter of the frusto-cone. Subsequently this is machined away in three places (in this example) so as to provide three faces 20 each of which is tapered in the opposite direction to the original frusto-cone. A portion of the original frusto-cone is left as indicated by the reference numeral 22, extending in three peaks rising at the points 24 to the larger end of the frusto-cone and extending as a complete ring as indicated at 26 at the smaller end of the frusto-cone.

The faces 20 may be stepped slightly inwards of the ring 26 to give rise to a shoulder 30.

The amount of metal removed can be seen (at a maximum) by considering the portion bounded by the broken line 18 (Fig. 3). Because of the angle selected for that view, this illustrates the maximum taken on any one face, and considered around the periphery of the nut, that amount reduces down to zero where the face 20 meets the untouched surface of the original frusto-cone at the peaks 24. It is the removal of metal which combined with the non-circular resulting nut which enables a satisfactory wedging action to be obtained but with a smaller displacement of metal than is required in the original design of the said GB—A—1093714. It is this which enables a satisfactory hold to be obtained with less risk of splitting, and hence enabling a wider tolerance in the material specification and in manufacturing.

## Claims

1. A nut fastener device for a blind hole anchor, comprising a tubular sleeve (10) and a screwthreaded nut (14) disposed at the end of the sleeve, the nut (14) having frusto-conical surface portions (22) with a maximum diameter (24) at the end of the nut remote from the sleeve and a minimum diameter at the end (26) nearest to the sleeve, the frusto cone being co-axial with the sleeve, and the arrangement being such that when the device is entered into a blind hole and a screwthreaded mandrel is passed through the sleeve and engaged with the nut and then displaced axially in the appropriate direction, the nut is drawn into the sleeve thereby expanding the sleeve and wedging the nut in the sleeve, characterised in that the nut (14) has at least one back tapered face (20) which is arcuate about an axis eccentric to that of said sleeve (10).

2. A device as claimed in Claim 1 wherein a plurality of back-tapered faces (20) are provided each arcuate about a separate eccentric axis.

3. A device as claimed in Claim 2 provided with three portions of the frusto-conical surface (22) and three back-tapered faces (20).

4. A device as claimed in Claim 2 wherein the back-tapered face (20) is axially shorter than the frusto-conical surface so as to leave a shoulder (26, 30) of the frusto-conical surface between the back tapered face and the sleeve.

**Patentansprüche**

1. Gewindemutter-Befestigungseinrichtung für einen Sackloch-Anker, enthaltend eine rohrförmige Hülse (10) und eine Gewindemutter (14), die an einem Ende der Hülse angeordnet ist, wobei die Gewindemutter (14) kegelstumpfförmige Oberflächenteile (22) aufweist, deren größter Durchmesser (24) sich an dem von der Hülse entfernt liegenden Ende der Mutter und deren kleinster Durchmesser sich an dem am nächsten zur Hülse liegenden Ende (26) befindet, wobei der Kegelstumpf koaxial zur Hülse liegt und wobei die Anordnung derart vorgesehen ist, daß wenn die Einrichtung in ein Sackloch eingeführt und eine Gewindespindel durch die Hülse hindurchgesteckt und in die Mutter eingeschraubt und dann in der passenden Richtung axial verlagert ist, die Mutter in die Hülse hineingezogen ist, wodurch die Hülse expandiert und die Mutter in der Hülse verkeilt ist, dadurch gekennzeichnet, daß die Mutter (14) wenigstens eine sich nach rückwärts verjüngende Fläche (20) besitzt, die bogenförmig um eine Achse verläuft, die exzentrisch zu der der Hülse (10) liegt.

2. Einrichtung nach Anspruch 1, dadurch gekennzeichnet, daß eine Vielzahl von sich nach rückwärts verjüngenden Flächen (20) vorgesehen ist, von denen jede um eine gesonderte exzentrische Achse bogenförmig verläuft.

3. Einrichtung nach Anspruch 2, dadurch gekennzeichnet, daß drei kegelstumpfförmige Oberflächenteile (22) und drei sich nach rückwärts verjüngende Flächen (20) vorhanden sind.

4. Einrichtung nach Anspruch 2, dadurch gekennzeichnet, daß die sich nach rückwärts verjüngende Fläche (20) in axialer Richtung kürzer ist als die kegelstumpfförmige Oberfläche, so daß eine Schulter (26, 30) der kegelstumpfförmigen Oberfläche zwischen der sich nach rückwärts verjüngenden Fläche und der Hülse verbleibt.

**Revendications**

1. Dispositif de fixation d'un tirant dans un trou borgne comprenant un manchon tubulaire (10) et un écrou fileté (14) disposé à l'extrémité du manchon, l'écrou (14) ayant des parties (22) à surface en tronc de cône avec un diamètre maximal (24) à l'extrémité de l'écrou opposée au manchon et un diamètre minimal à l'extrémité (26) la plus proche du manchon, le tronc de cône étant coaxial au manchon et la disposition étant telle que, quand le dispositif est introduit dans un trou borgne et qu'un mandrin fileté est engagé à travers le manchon et accouplé à l'écrou puis déplacé axialement dans le sens convenable, l'écrou soit tiré dans le manchon en élargissant le manchon et coinçant l'écrou dans le manchon, caractérisé en ce que l'écrou (14) a au moins une face ramenée en arrière (20) qui est arquée autour d'un axe excentré par rapport à celui dudit manchon (10).

2. Dispositif selon la revendication 1 dans lequel on établit plusieurs faces ramenées en arrière (20) dont chacune est arquée autour d'un axe excentré séparé.

3. Dispositif selon la revendication 2 muni de trois parties de la surface en tronc de cône (22) et de trois faces ramenées en arrière (20).

4. Dispositif selon la revendication 2, dans lequel la face ramenée en arrière (20) est en direction axiale plus courte que la surface en tronc de cône de façon à ménager un épaulement (26, 30) de la surface en tronc de cône entre la face ramenée en arrière et le manchon.

Fig. 1

Fig. 2

Fig. 3

Fig. 4